# EUROPÄISCHE PATENTSCHRIFT

(11) **EP 1 115 590 B1**
(45) Veröffentlichungstag und Bekanntmachung des Hinweises auf die Patenterteilung: **31.07.2002**
(21) Anmeldenummer: 99923442.0
(22) Anmeldetag: 22.04.1999
(51) Int. Cl.: B60K 5/02, F02B 75/22, B60K 17/346, B60K 17/04, B60K 17/22

(54) **EINBAUANORDNUNG EINER EINEN VERBRENNUNGSMOTOR UND EIN GETRIEBE AUFWEISENDEN ANTRIEBSEINHEIT EINES FAHRZEUGES**
MOUNTING ARRANGEMENT OF AN AUTOMOBILE DRIVE UNIT HAVING A COMBUSTION ENGINE AND A TRANSMISSION
CONFIGURATION DE MONTAGE D'UN GROUPE MOTOPROPULSEUR D'UN VEHICULE, COMPRENANT UN MOTEUR A COMBUSTION ET UNE TRANSMISSION

(30) Priorität: 21.09.1998 DE 19843258
(43) Veröffentlichungstag der Anmeldung: 18.07.2001
(73) Patentinhaber: Volkswagen Aktiengesellschaft, 38436 Wolfsburg (DE)
(72) Erfinder: PIECH, Ferdinand, D-38118 Braunschweig (DE); LAGIES, Dietmar, D-38124 Braunschweig (DE)
(86) Internationale Anmeldenummer: EP9902716
(87) Internationale Veröffentlichungsnummer: WO0017003

(56) Entgegenhaltungen:
- EP-A- 0 411 319
- EP-A- 0 481 123
- EP-B- 0 514 943
- DE-A- 2 904 066
- DE-A- 3 920 638
- DE-A- 4 029 058
- DE-A- 4 107 286
- DE-C- 499 549
- DE-C- 3 837 256
- FR-A- 1 520 767
- US-A- 3 052 313
- PATENT ABSTRACTS OF JAPAN vol. 17, no. 18 (M-1352), 13. Januar 1993 (1993-01-13) -& JP 04 244426 A (MAZDA), 1. September 1992 (1992-09-01)

## Beschreibung

Die Erfindung betrifft eine Einbauanordnung einer für ein Fahrzeug vorgesehenen, einen Verbrennungsmotor sowie ein Getriebe aufweisenden Antriebseinheit gemäß dem Oberbegriff des Patentanspruches 1. Eine derartige Einbauanordnung ist der DE 4029058 A zu entnehmen.

Aus der EP 0411319 A2 ist ein Kraftfahrzeug mit einer Reihenbrennkraftmaschine bekannt, mit einer in einem Gehäuse des Verbrennungsmotors gelagerten Kurbelwelle und einer von dieser angetriebenen, parallelen Nebenwelle, welche zur Leistungsübertragung in das Getriebe dient. Die Anordnung ist dabei so getroffen, daß der als Hubkolbenbrennkraftmaschine ausgebildete Verbrennungsmotor in Fahrzeugbug quer zwischen den angetriebenen Vorderrädem mit der einen Zylinderreihe nach hinten geneigt eingebaut ist, wobei die Nebenwelle vor der Brennkraftmaschine liegend über einen stirnseitig der Brennkraftmaschine angeordneten Radsatz angetrieben wird. Diese Nebenwelle überträgt die Leistung der Brennkraftmaschine direkt in ein Getriebe, wobei eine in Fahrtrichtung hinter der Brennkraftmaschine liegende Abtriebswelle des Getriebes über eine Verzweigung die den Vorderrädern zugeordneten Antriebswellen antreibt.

Aus DE 39 206 38 C2 ist ein Antriebssystem für ein Kraftfahrzeug mit einer einreihigen, in Längsrichtung verbauten Brennkraftmaschine bekannt, bei der in Fahrtrichtung hinter der Brennkraftmaschine liegend ein längsverbautes Getriebe angeordnet ist, welches direkt von der Kurbelwelle angetrieben wird und dessen seitlich neben der Brennkraftmaschine verlaufende Abtriebswelle eine als Differential ausgebildete Verzweigung in einem separat an einer Ölwanne ausgebildeten Gehäuse antreibt. Zwischen diesem Differential und dem auf der anderen Seite der Brennkraftmaschine liegenden Fahrzeugrad verläuft eine die Ölwanne der Brennkraftmaschine durchsetzenden Zwischenwelle.
Zur Verringerung der Einbauhöhe dieses00 Antriebssystemes ist die Zylinderreihe in Fahrtrichtung gesehen nach rechts geneigt verbaut, so daß das Differential, von oben gesehen, unterhalb der Zylinderreihe liegend angeordnet ist.

Schließlich ist es aus EP 0514943 B1 für eine Brennkraftmaschine mit zu einer senkrechten Ebene symmetrischen V-förmigen Zylinderanordnung und längsliegender Kurbelwelle bekannt, für eine bauraumverkürzende Anordnung der aus Brennkraftmaschine und Getriebe bestehenden Antriebseinheit, das von der seitlich neben der Brennkraftmaschine geführten Abtriebswelle des Getriebes angetriebene Differential seitlich neben der Brennkraftmaschine in Fahrtrichtung weit vorne liegend anzuordnen.

Der Erfindung liegt die Aufgabe zugrunde, eine gattungsgemäße Einbauanordnung einer Antriebseinheit mit einem Verbrennungsmotor und einem Getriebe in einem Fahrzeug zu schaffen, welche in bauraumsparender Anordnung eine vergleichsweise große Zylinderanzahl ermöglicht und einen geringen Fahrzeugüberhang vor den Fahrzeugrädern ermöglicht.

Die Lösung dieser Aufgabe gelingt mit den Merkmalen des Patentanspruches 1.

Vorteilhafte Ausgestaltungen der Erfindung sind in den abhängigen Ansprüchen angegeben.

Erfindungsgemäß ist vorgesehen, daß in Abweichung vom gattungsgemäßen Stand der Technik eine der mindestens zwei winkelig zueinander stehenden Zylinderreihen horizontal oder im wesentlichen horizontal liegend angeordnet sind. Unter dem Begriff "winkelig" seien hier Winkel von 90° Grad +/- 45° Grad verstanden, jedoch nicht Winkel in der Größenordnung von 180° Grad, wie sie für Boxer-Brennkraftrnaschinen und ihre zumindest in der Breite raumgreifende Anordnung gelten.

Die Abgabe der Abtriebsleistung von der Kurbelwelle nicht direkt von dieser in das Getriebe, sondern über die Nebenwelle in das in der Regel fahrzeugmittig angeordnete Getriebe ermöglicht ein seitliches Herausrücken der Kurbelwelle aus dieser Fahrzeugmitte, was wiederum auf der gegenüberliegenden Seite den Einbauraum vergrößert, welcher durch die liegende Zylinderreihe ausgefüllt wird. Die winkelig zu dieser liegenden Zylinderreihe angeordnete zweite Zylinderreihe kann senkrecht stehen, kann jedoch auch zu weiterer Einbauhöhenverringerung seitlich zu der einen oder anderen Seite der Fahrzeuglängsmittelebene herausgeschwenkt angeordnet sein.

In bevorzugter Ausgestaltung kann zur weiteren Bauraumoptimierung vorgesehen sein, das anstelle der Kurbelwelle die Nebenwelle in Fahrzeugmittelebene verlaufend angeordnet ist, wobei eine im Gehäuse des Verbrennungsmotors vorgesehene, die Nebenwelle und die Kurbelwelle lagernde Teilungsebene schräg angestellt, d. h. geneigt zu einer Senkrechten angeordnet ist.

Weitere Vorteile und Merkmale der Erfindung ergeben sich aus dem nachfolgend anhand einer Zeichnung näher erläuterten Ausführungsbeispieles.

Wenn im Rahmen dieser Offenbarung von einer liegenden oder einer horizontalen Anordnung einer Zylinderreihe gesprochen wird, so ist hiermit nicht zwanghaft eine exakt horizontal liegende Zylinderreihe gemeint, vielmehr ist ohne von den erfindungsgemäßen Vorteilen abzuweichen eine geringfügige Abweichung der Zylinderreihenlage in beide Richtungen möglich.

Es zeigen:
Figur 1: eine schematische Seitenansicht einer Einbauanordnung,

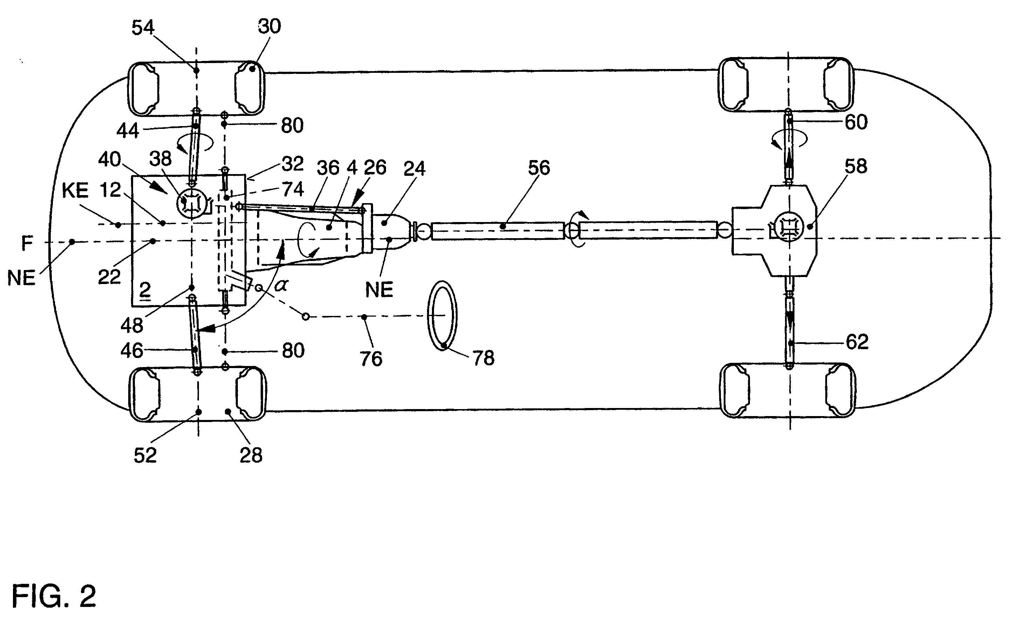

Figur 2: eine Draufsicht,

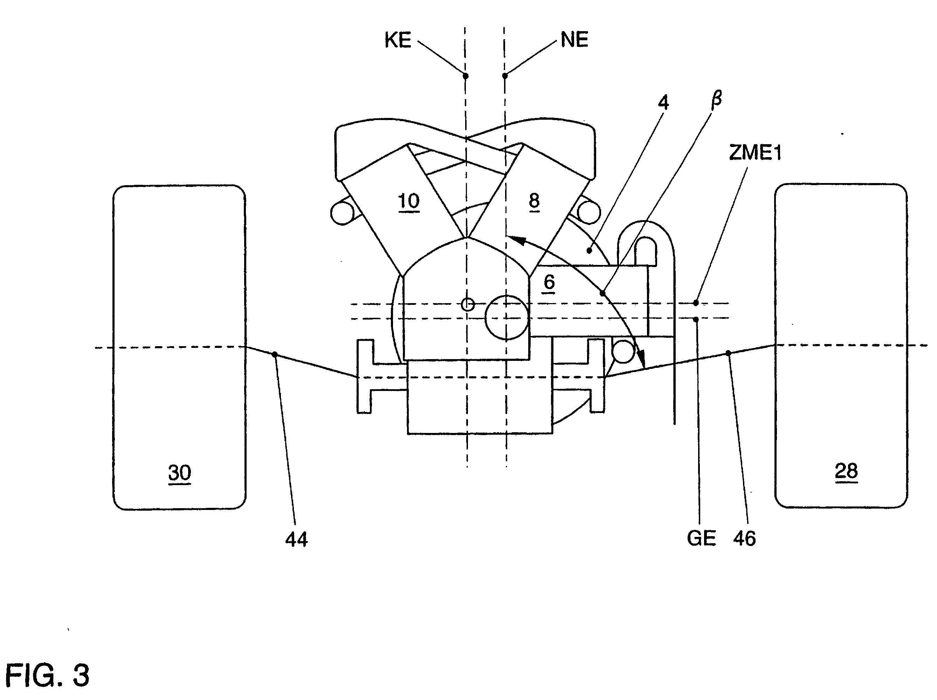

Figur 3: eine schematische Ansicht von vorne,

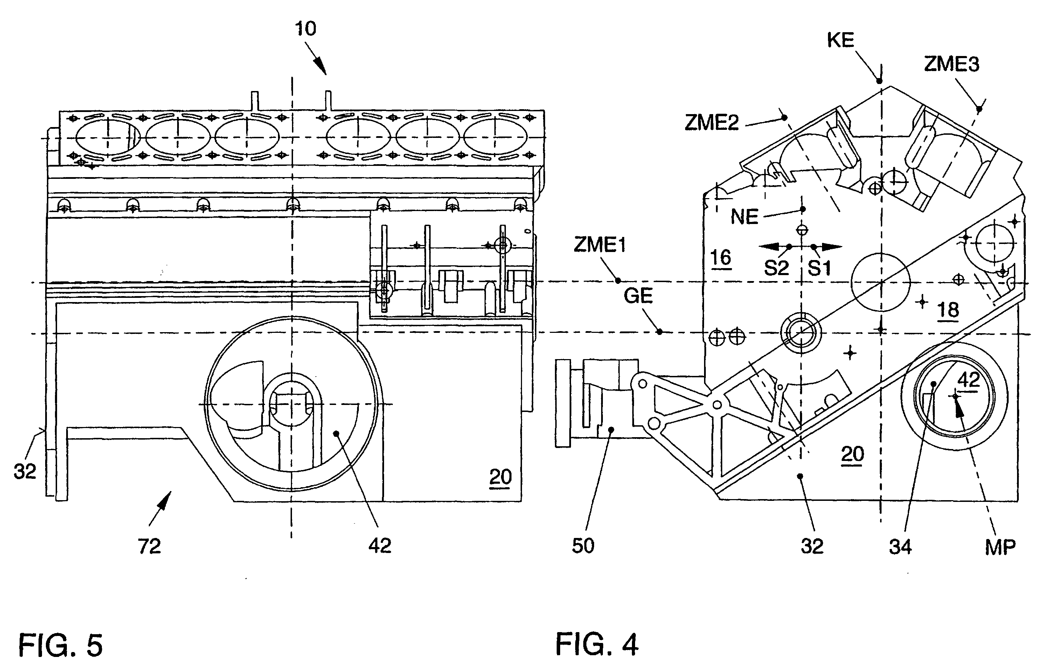

Figur 4: eine Ansicht von hinten nur auf den Verbrennungsmotor,
Figur 5: eine Ansicht von rechts zu Fig. 4,

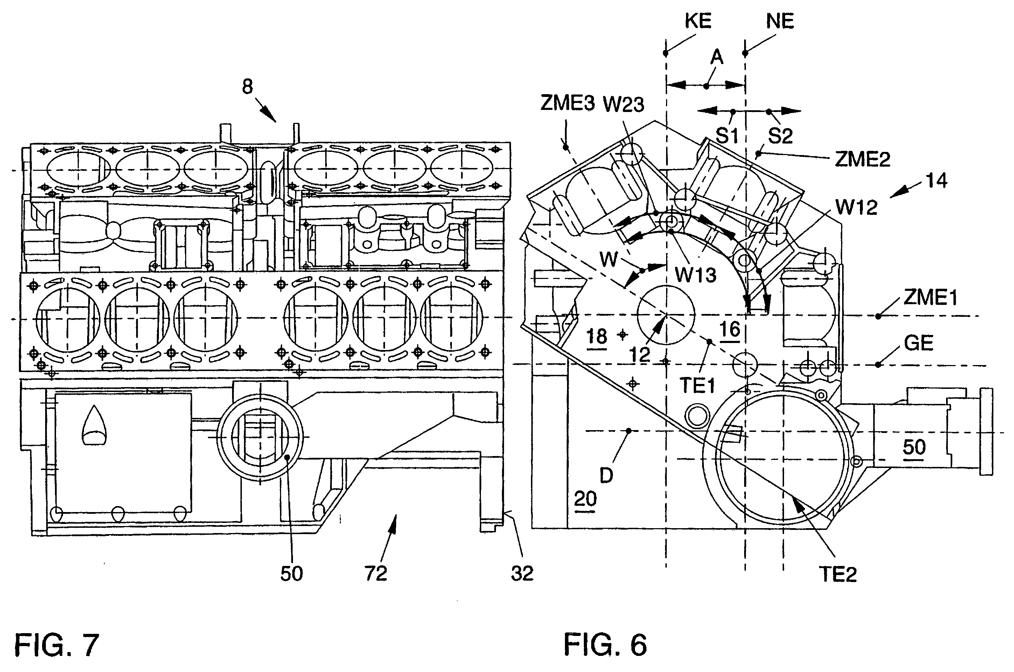

Figur 6: eine Ansicht von vorne nur auf dem Verbrennungsmotor und
Figur 7: eine Ansicht von rechts zu Fig. 6.

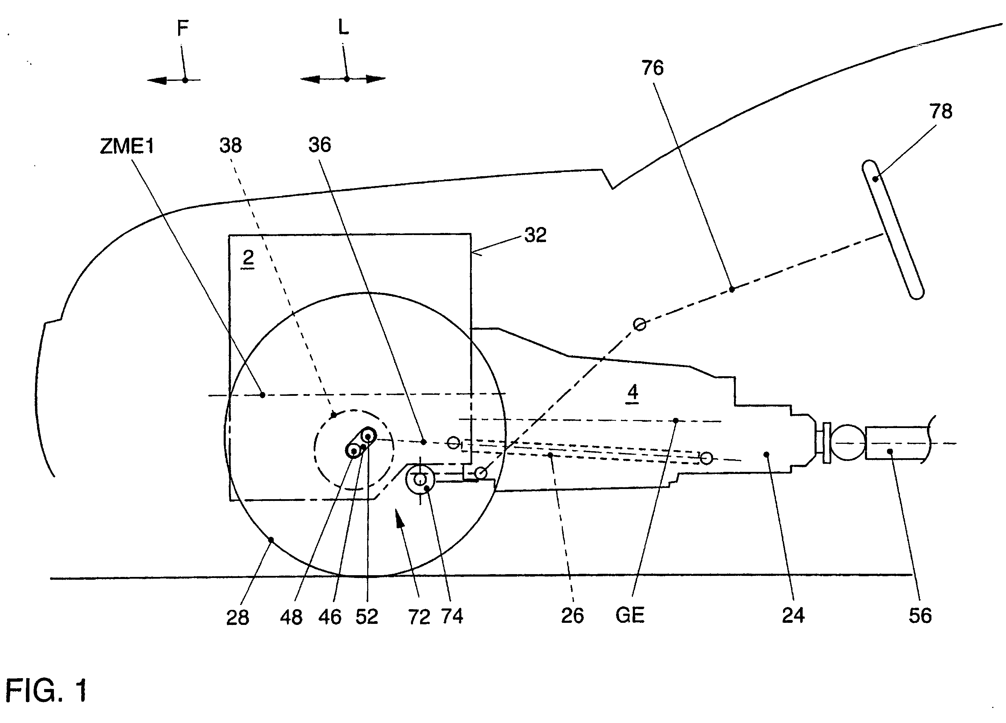

Ein in Figur 1 nur mit seinem Vorderwagenbereich schematisch dargestelltes Fahrzeug weist eine aus einem Verbrennungsmotor 2 und einem Getriebe 4 gebildete Antriebseinheit auf. Die Antriebseinheit ist in Längsrichtung L des Fahrzeuges verbaut, welche einer Fahrtrichtung F entspricht. Der Verbrennungsmotor 2 weist in Fahrtrichtung F im Uhrzeigersinn gesehen insgesamt drei jeweils sechszylindrige Zylinderreihen 6, 8, 10 auf, wobei die erste Zylinderreihe 6 liegend angeordnet ist, eine zweite Zylinderreihe 8 und eine dritte Zylinderreihe 10 jeweils winkelig zur ersten Zylinderreihe 6 so angeordnet sind, daß die zweite Zylinderreihe 8 in der Winkelhalbierenden zwischen der ersten und dritten Zylinderreihe 6 und 10 angeordnet ist.

Gegenüber einer senkrecht verlaufenden, eine Kurbelwelle 12 aufnehmenden Kurbelwellenebene KE sind die zweite und dritte Zylinderreihe 8 und 10 symmetrisch in der Art einer V-Anordnung vorgesehen.

Das insgesamt mit 14 bezeichnete Gehäuse des Verbrennungsmotors 2 ist im wesentlichen aus drei größeren Bauteilen gebildet, einem die drei Zylinderreihen 6, 8, 10 tragenden Kurbelgehäuseoberteil 16, einer daran angrenzend befestigten Lagertraverse 18 sowie einem wiederum an diese angrenzenden Gehäuseunterteil 20. Kurbelgehäuseoberteil 16 und Lagertraverse 18 grenzen in einer Teilungsebene ZME1 aneinander, in welcher die Kurbelwelle 12 sowie eine von dieser angetriebene Nebenwelle 22 drehbar gelagert sind.

Parallel zur einen Teilungsebene ZME1 verläuft zwischen Lagertraverse 18 und Gehäuseunterteil 20 eine zweite Teilungsebene GE; beide Teilungsebenen ZME1, GE sind um einen Winkel W geneigt zur Kurbelwellenebene KE und zur Nebenwellenebene NE angeordnet.

Die Nebenwelle 22 läuft in einer parallel und um einen Abstand A zur Kurbelwellenebene KE entfernt angeordneten Nebenwellenebene NE, welche identisch mit einer Fahrzeug-Längsmittelebene ist.

Die Nebenwelle 22 wird in nichtgezeigter Weise innerhalb des Gehäuses 14 von der Kurbelwelle 12 angetrieben und dient der Leistungsübertragung in das Getriebe 4.
Das Getriebe 4 trägt in Fahrtrichtung F hintenliegend ein Verteilergetriebe 24, welches in weiter unten erläuterter Art und Weise optional über einen Abtrieb Hinterräder des Fahrzeuges antreibt sowie über eine nach vorne geführte Abtriebswelle 26 in noch zu beschreibender Art und Weise seitlich neben der Antriebseinheit angeordnete, lenkbare Räder 28 und 30 antreibt.

An einer in Fahrtrichtung F des Fahrzeuges hintenliegenden Stirnwand 32 des Verbrennungsmotors 2 ist eine einen Mittelpunkt MP tragende Öffnung 34 vorgesehen, an welche in nicht näher gezeigter Weise die Abtriebswelle 26 angelenkt ist.

Die Kurbelwellenebene KE vertäuft auf einer in Fahrtrichtung F rechtsliegenden Seite S1 von der Nebenwellenebene NE aus gesehen, während der Mittelpunkt MP wiederum in Fahrtrichtung F gesehen, rechts dieser Kurbelwellenebene KE liegt.

Die an die Öffnung 34 angeschlossene Abtriebswelle 26 verläuft vom Verteilergetriebe 24 aus in Fahrtrichtung F ansteigend und treibt im Gehäuseunterteil 20 eine dort abgestützte und gelagerte kurze Welle 36 an. Diese Welle 36 treibt eine als Differential 38 ausgebildete Verzweigung 40 an. Zur Aufnahme dieses Differentials 38 ist im Gehäuseunterteil 20 integral eine topfartige Vertiefung 42 eingezogen angeordnet. Abtriebsseitig sind an das Differential 38 in Fahrtrichtung F gesehen direkt eine zum rechten Rad 30 führende Antriebswelle 44 und eine zu einer Antriebswelle 46 des linken Rades 28 führende Zwischenwelle 48 angeordnet. Diese Zwischenwelle 48 ist differentialseitig in der Vertiefung 42 gelagert und erstreckt sich mit ihrer Längsachse D die Teilungsebene TE1 und TE2 durchsetzend durch einen integral mit der Lagertraverse 18 ausgebildeten Lagerhals 50. Ausgangsseitig dieses Lagerhalses 50 ist die Antriebswelle 46 angeschlossen und überträgt die Antriebsleistung auf das Rad 28, wobei beide Antriebswellen 44, 46 im Bereich der Radachsen 52, 54 angelenkt sind.

Beide Antriebswellen 44, 46 sind bei Draufsicht auf das Fahrzeug, bezüglich der Fahrtrichtung F nach hinten gepfeilt angestellt, d. h. ein Winkel α zwischen Fahrzeug-Längsmittelebene bzw. Nebenwellenebene NE und Antriebswellen 44, 46 ist kleiner als 90° Grad.

Beide Antriebswellen 44, 46 sind bei Ansicht von vome auf das Fahrzeug nach oben geneigt verlaufend angeordnet, d. h. ein Winkel β zwischen Fahrzeug-Längsmittelebene bzw. Nebenwellenebene NE und Antriebswellen 44, 46 ist kleiner als 90° Grad.

Wie eingangs der Figurenbeschreibung bereits erwähnt, kann das Verteilergetriebe 24 einen weiteren Abtrieb in Form einer Kardanwelle 56 aufweisen, welche zu einem Hinterachsdifferential 58 führt und von dort aus Hinterräder über Gelenkwellen 60, 62 antreibt.

Zwischen der Stirnwand 32 und der Vertiefung 42 für das Differential 38 ist im Gehäuseunterteil 20 ein Freigang 72 für ein Lenkgetriebe 74 vorgesehen. Dieses wird unter Zwischenschaltung einer Lenksäule 76 von einem Lenkrad 78 aus betätigt und überträgt dessen Drehbewegungen mittels Spurstangen 80 auf die angetriebenen Räder 28 und 30.

Besonders bauraumsparende und einbaugünstige Verhältnisse ergeben sich, wenn der Winkel zwischen der ersten Zylindermittelebene ZME1 und der dritten Zylindermittelebene ZME3 W13 120° Grad beträgt, infolge dessen die in der winkelhalbierenden angeordnete Zylindermittelebene 2 zu den benachbarten Zylindermittelebenen ZME1 und ZME3 jeweils einen Winkel W12 bzw. W23 von 60° Grad aufweist.
Für den Winkel W stellen sich bauraumgünstige Werte zwischen 25° Grad und 35° Grad ein, vorzugsweise zwischen 30 und 35° Grad, insbesondere bei 33° Grad.

## Patentansprüche

1. Einbauanordnung einer einen Verbrennungsmotor (2) und ein Getriebe (4) aufweisenden Antriebseinheit eines Fahrzeuges mit
- einer in einem Gehäuse (14) des Verbrennungsmotors (2) gelagerten Kurbelwelle (12) und einer von dieser angetriebenen, parallelen Nebenwelle (22), welche zur Leistungsübertragung in das Getriebe (4) dient,
- einer Abtriebswelle (26) des Getriebes (4), welche über eine Verzweigung (40) Antriebswellen (46, 44) von seitlichen neben der Antriebseinheit angeordneten Rädern (28, 30) des Fahrzeuges antreibt,
wobei
- die Kurbelwelle (12) in Längsrichtung (L) des Fahrzeuges liegend angeordnet ist, und
- die Zylinder des Verbrennungsmotors (2) in mindestens zwei winkelig zueinanderstehenden Zylinderreihen (6, 8; 6, 10) angeordnet sind, **dadurch gekennzeichnet, daß**
- eine dieser Zylinderreihen (6) horizontal oder im wesentlichen horizontal liegend angeordnet ist.

2. Anordnung nach Anspruch 1,
**dadurch gekennzeichnet, daß**
die Kurbelwelle (12) und die Nebenwelle (22) jeweils aufnehmende, senkrecht verlaufende Ebenen derart beabstandet zueinander angeordnet sind, daß eine die Nebenwelle (22) aufnehmende Nebenwellenebene (NE) identisch mit einer Fahrzeuglängsmittelebene ist und eine die Kurbelwelle (12) aufnehmende Kurbelwellenebene (KE) mit einem Abstand (A) dazu zu einer Seite (S1, S2) versetzt angeordnet ist.

3. Anordnung nach Anspruch 2,
**dadurch gekennzeichnet, daß**
die Abtriebswelle (26) des Getriebes an einer in Fahrtrichtung (F) des Fahrzeuges hinten liegenden Stirnwand (32) des Verbrennungsmotors (2) angelenkt ist und der Mittelpunkt (MP) einer hierfür vorgesehenen Öffnung (34) im Gehäuse (14) des Verbrennungsmotors (2) derartig beabstandet zu einer Seite (S1, S2) der Fahrzeug-längsmittelebene angeordnet ist, daß die Kurbelwellenebene (KE) zwischen diesem Mittelpunkt (MP) und der Nebenwellenebene (NE) liegt.

4. Anordnung nach Anspruch 3,
**dadurch gekennzeichnet, daß**
das Gehäuse (14) des Verbrennungsmotors (2) zumindest zwei Teilungsebenen (TE1, TE2) aufweist, wobei in der einen Teilungsebene (TE1) ein die Zylinderreihen (6, 8; 6, 10) tragendes Kurbelgehäuseoberteil (16) und eine Lagertraverse (18) aneinander grenzen und in dieser einen Teilungsebene (TE1) die Kurbelwelle (12) und die Nebenwelle (22) gelagert sind und wobei in der anderen Teilungsebene (TE2) die Lagertraverse (18) und ein Gehäuseunterteil (20) aneinander grenzen.

5. Anordnung nach Anspruch 4,
**dadurch gekennzeichnet, daß**
die Teilungsebenen (TE1, TE2) parallel zueinander und um einen Winkel (W) geneigt zur Kurbelwellenebene (KE) bzw. zur Nockenwellenebene (NE) geneigt angeordnet sind.

6. Anordnung nach Anspruch 5,
**dadurch gekennzeichnet, daß**
eine Zylindermittelebene (ZME1) der horizontalen oder im wesentlichen horizontalen Zylinderreihe (6) senkrecht zu der Kurbelwellenebene (KE) angeordnet ist, parallel und unterhalb dazu eine die Nebenwelle (22) aufnehmende Getriebeebene (GE) verläuft und der Mittelpunkt (MP) der Öffnung (34) unterhalb der Getriebeebene (GE) liegt.

7. Anordnung nach Anspruch 6,
**dadurch gekennzeichnet, daß**
die Verzweigung (40) als Differential (38) ausgebildet in dem Gehäuseunterteil (20) angeordnet ist und eine Längsachse (D) einer zwischen dieses Differential (38) und zumindest eine der Antriebswellen (46) geschalteten Zwischenwelle (48) unterhalb des Mittelpunktes (MP) verläuft.

8. Anordnung nach Anspruch 7,
**dadurch gekennzeichnet, daß**
die Zwischenwelle (48) die Lagertraverse (18) innerhalb eines dieser zugeordneten Lagerhalses (50) durchsetzt.

9. Anordnung nach einem oder mehreren der vorhergehenden Ansprüche,
**dadurch gekennzeichnet, daß**
der Verbrennungsmotor (2) eine weitere Zylinderreihe (8; 10) aufweist, welche zwischen den winkelig zueinanderstehenden Zylinderreihen (6, 10; 6, 8) angeordnet ist.

10. Anordnung nach Anspruch 9,
**dadurch gekennzeichnet, daß**
in Fahrtrichtung (F) gesehen im Uhrzeigersinn die liegende Zylinderreihe (6) als erste, die weiteren Zylinderreihen als zweite und dritte Zylinderreihen (8 und 10) aufeinanderfolgend angeordnet sind.

11. Anordnung nach Anspruch 10,
**dadurch gekennzeichnet, daß**
zweite (8) und dritte (10) Zylinderreihe in der Art eines V-Motors symmetrisch zur Kurbelwellenebene (KE) angeordnet sind und eine Zylindermittelebene (ZME2) der zweiten Zylinderreihe (8) in der Winkelhalbierenden zwischen Zylindermittelebene (ZME1) der ersten und der Zylindermittelebene (ZME3) der dritten Zylinderreihe (10) liegt.

12. Anordnung nach einem oder mehreren der vorhergehenden Ansprüche,
**dadurch gekennzeichnet, daß**
der bei Draufsicht auf das Fahrzeug zwischen Antriebswellen (44, 46) und Fahrzeuglängsmittelebene liegende Winkel (α) kleiner ist als 90° Grad.

13. Anordnung nach Anspruch 12,
**dadurch gekennzeichnet, daß**
der bei Ansicht von vorne auf das Fahrzeug zwischen Antriebswellen (44, 46) und Fahrzeuglängsmittelebene liegende Winkel (β) kleiner ist als 90° Grad.

## Claims

1. Mounting arrangement of a vehicle drive unit having an internal combustion engine (2) and a transmission (4), with
- a crankshaft (12) mounted in a housing (14) of the internal combustion engine (2) and a parallel secondary shaft (22) which is driven by said crankshaft and serves for transmitting power into the transmission (4),
- an output shaft (26) of the transmission (4), which output shaft drives, via a power divider (40), drive shafts (46, 44) of lateral wheels (28, 30) of the vehicle which are arranged next to the drive unit,
in which
- the crankshaft (12) is arranged so as to lie in the longitudinal direction (L) of the vehicle, and
- the cylinders of the internal combustion engine (2) are arranged in at least two cylinder rows (6, 8; 6, 10) standing at an angle to one another,
**characterized in that**
- one of these cylinder rows (6) is arranged so as to lie horizontally or essentially horizontally.

2. Arrangement according to Claim 1, **characterized in that** vertically running planes receiving in each case the crankshaft (12) and the secondary shaft (22) are arranged at a distance from one another such that a secondary-shaft plane (NE) receiving the secondary shaft (22) is identical to a vehicle longitudinal mid-plane and a crankshaft plane (KE) receiving the crankshaft (12) is arranged, offset to one side (S1, S2), at a distance (A) from said secondary-shaft plane.

3. Arrangement according to Claim 2, **characterized in that** the output shaft (26) of the transmission is articulated on one end wall (32) of the internal combustion engine (2), said end wall being located at the rear in the direction of travel (F) of the vehicle, and the mid-point (MP) of an orifice (34) provided for this purpose in the housing (14) of the internal combustion engine (2) is arranged at a distance to one side (S1, S2) of the vehicle longitudinal mid-plane such that the crankshaft plane (KE) lies between this mid-point (MP) and the secondary-shaft plane (NE).

4. Arrangement according to Claim 3, **characterized in that** the housing (14) of the internal combustion engine (2) has at least two parting planes (TE1, TE2), in one parting plane (TE1) a crankcase upper part (16), which carries the cylinder rows (6, 8; 6, 10), and a bearing crossmember (18) adjoining one another and the crankshaft (12) and the secondary shaft (22) being mounted in this one parting plane (TE1), and the bearing crossmember (18) and a housing lower part (20) adjoining one another in the other parting plane (TE2).

5. Arrangement according to Claim 4, **characterized in that** the parting planes (TE1, TE2) are arranged parallel to one another and at an inclination by an angle (W) to the crankshaft plane (KE) and to the camshaft plane (NE).

6. Arrangement according to Claim 5, **characterized in that** a cylinder mid-plane (ZME1) of the horizontal or essentially horizontal cylinder row (6) is arranged perpendicularly to the crankshaft plane (KE), a transmission plane (GE) receiving the secondary shaft (22) runs parallel to and below said cylinder mid-plane, and the mid-point (MP) of the orifice (34) lies below the transmission plane (GE).

7. Arrangement according to Claim 6, **characterized in that** the power divider (40), designed as a differential (38), is arranged in the housing lower part (20), and a longitudinal axis (D) runs between this differential (38) and at least one intermediate shaft (48), connected to the drive shaft (46), below the mid-point (MP).

8. Arrangement according to Claim 7, **characterized in that** the intermediate shaft (48) passes through the bearing crossmember (18) within a bearing neck (50) assigned to the latter.

9. Arrangement according to one or more of the preceding claims, **characterized in that** the internal combustion engine (2) has a further cylinder row (8; 10) which is arranged between the cylinder rows (6, 10; 6, 8) standing at an angle to one another.

10. Arrangement according to Claim 9, **characterized in that** the horizontal cylinder row (6) as the first, and the further cylinder rows as the second and third, cylinder rows (8 and 10) are arranged in succession clockwise as seen in the direction of travel (F).

11. Arrangement according to Claim 10, **characterized in that** the second (8) and third (10) cylinder rows are arranged symmetrically to the crankshaft plane (KE) in the manner of a V-engine, and a cylinder mid-plane (ZME2) of the second cylinder row (8) lies in the angle-bisecting line between the cylinder mid-plane (ZME1) of the first and the cylinder mid-plane (ZME3) of the third cylinder row (10).

12. Arrangement according to one or more of the preceding claims, **characterized in that** the angle (α) lying between the drive shafts (44, 46) and the vehicle longitudinal mid-plane in a top view of the vehicle is smaller than 90°.

13. Arrangement according to Claim 12, **characterized in that** the angle (β) lying between the drive shafts (44, 46) and the vehicle longitudinal mid-plane in a front view of the vehicle is smaller than 90°.

## Revendications

1. Configuration de montage d'un groupe motopropulseur d'un véhicule, comprenant un moteur à combustion (2) et une transmission (4), avec
- un vilebrequin (12) monté dans un carter (14) du moteur à combustion (2) et un contre-arbre (22) parallèle, entraîné par celui-ci, qui sert à la transmission de puissance dans la transmission (4),
- un arbre de sortie (26) de la transmission (4), qui entraîne, par le biais d'un branchement (40), des arbres d'entraînement (46, 44) de roues (28, 30) du véhicule disposées latéralement près du groupe motopropulseur,
- le vilebrequin (12) étant disposé dans la direction longitudinale (L) du véhicule, et
- les cylindres du moteur à combustion (2) étant disposés dans au moins deux rangées de cylindres (6, 8 ; 6, 10) inclinées suivant un certain angle l'une par rapport à l'autre,
**caractérisée en ce que**
- l'une de ces rangées de cylindres (6) est disposée horizontalement ou essentiellement horizontalement.

2. Configuration selon la revendication 1, **caracterisée en ce que** des plans s'étendant perpendiculairement, recevant chacun le vilebrequin (12) et le contre-arbre (22) sont disposés espacés l'un de l'autre de telle sorte qu'un plan de contre-arbre (NE) recevant le contre-arbre (22) soit identique à un plan médian longitudinal du véhicule, et qu'un plan de vilebrequin (KE) recevant le vilebrequin (12) soit décalé d'un côté (S1, S2) d'une distance (A) par rapport à celui-ci.

3. Configuration selon la revendication 2, **caractérisée en ce que** l'arbre de sortie (26) de la transmission est articulé à une paroi frontale (32) du moteur à combustion (2) se trouvant en arrière dans une direction d'avance (F) du véhicule, et le centre (MP) d'une ouverture (34) prévue à cet effet dans le carter (14) du moteur à combustion (2) est espacé de telle sorte vers un côté (S1, S2) du plan médian longitudinal du véhicule, que le plan de vilebrequin (KE) se trouve entre ce centre (MP) et le plan de contre-arbre (NE).

4. Configuration selon la revendication 3, **caractérisée en ce que** le carter (14) du moteur à combustion (2) présente au moins deux plans de séparation (TE1, TE2), une partie supérieure du carter du vilebrequin (16) portant les rangées de cylindres (6, 8 ; 6, 10) et une traverse de support (18) étant juxtaposées dans l'un des plans de séparation (TE1), et le vilebrequin (12) et le contre-arbre (22) étant montés dans ce plan de séparation (TE1), et la traverse de support (18) et une partie inférieure du carter (20) étant juxtaposées dans l'autre plan de séparation (TE2).

5. Configuration selon la revendication 4, **caractérisée en ce que** les plans de séparation (TE1, TE2) sont disposés parallèlement l'un à l'autre et inclinés suivant un certain angle (W) par rapport au plan de vilebrequin (KE) ou au plan de contre-arbre (NE).

6. Configuration selon la revendication 5, **caractérisée en ce qu'**un plan médian de cylindres (ZME1) de la rangée horizontale ou substantiellement horizontale de cylindres (6) est disposé perpendiculairement au plan de vilebrequin (KE), un plan de transmission (GE) recevant le contre-arbre (22) s'étend parallèlement et en dessous de celui-ci, et le centre (MP) de l'ouverture (34) se trouve en dessous du plan de transmission (GE).

7. Configuration selon la revendication 6, **caractérisée en ce que** le branchement (40) réalisé en tant que différentiel (38) est disposé dans la partie inférieure du carter (20), et un axe longitudinal (D) d'un arbre intermédiaire (48) monté entre ce différentiel (38) et au moins l'un des arbres d'entraînement (46) s'étend en dessous du centre (MP).

8. Configuration selon la revendication 7, **caractérisée en ce que** l'arbre intermédiaire (48) traverse la traverse de support (18) à l'intérieur d'une bride de support (50) associée à celle-ci.

9. Configuration selon l'une quelconque ou plusieurs des revendications précédentes, **caractérisée en ce que** le moteur à combustion (2) présente une rangée de cylindres supplémentaire (8 ; 10) qui est disposée entre les rangées de cylindres (6, 10 ; 6, 8) inclinées suivant un certain angle l'une par rapport à l'autre.

10. Configuration selon la revendication. 9, **caractérisée en ce que**, vu dans la direction d'avance (F) dans le sens horaire, la rangée de cylindres (6) est disposée en tant que première rangée de cylindres, les rangées de cylindres supplémentaires sont disposées en tant que deuxième et troisième rangées de cylindres (8 et 10) en succession les unes derrière les autres.

11. Configuration selon la revendication 10, **caractérisée en ce que** les deuxième (8) et troisième (10) rangées de cylindres sont disposées à la manière d'un moteur en V symétriquement par rapport au plan du vilebrequin (KE) et un plan médian de cylindres (ZME2) de la deuxième rangée de cylindres (8) se trouve dans la bissectrice entre le plan médian de cylindres (ZME1) de la première rangée de cylindres et le plan médian de cylindres (ZME3) de la troisième rangée de cylindres (10).

12. Configuration selon l'une quelconque ou plusieurs des revendications précédentes, **caractérisée en ce que**, si l'on considère le véhicule de dessus, l'angle (•) se trouvant entre les arbres d'entraînement (44, 46) et le plan médian longitudinal du véhicule est inférieur à 90°.

13. Configuration selon la revendication 12, **caractérisée en ce que**, si l'on considère le véhicule vu de face, l'angle (•) se trouvant entre les arbres d'entraînement (44, 46) et le plan médian longitudinal du véhicule est inférieur à 90°.
